Europäisches Patentamt

European Patent Office

Office européen des brevets

(19)

(11) Veröffentlichungsnummer: **0 208 327 B1**

(12) **EUROPÄISCHE PATENTSCHRIFT**

(45) Veröffentlichungstag der Patentschrift: 24.07.91

(21) Anmeldenummer: 86109466.2

(22) Anmeldetag: 10.07.86

(51) Int. Cl.⁵: **H04M 3/30**, H04Q 11/04, H04B 17/02

(54) **Digitaler Teilnehmeranschluss.**

(30) Priorität: 11.07.85 DE 3524793

(43) Veröffentlichungstag der Anmeldung:
14.01.87 Patentblatt 87/03

(45) Bekanntmachung des Hinweises auf die
Patenterteilung:
24.07.91 Patentblatt 91/30

(84) Benannte Vertragsstaaten:
**AT BE CH DE FR GB IT LI NL SE**

(56) Entgegenhaltungen:
**EP-A- 0 018 295**
**EP-A- 0 031 943**
**AU-B- 494 731**
**DE-B- 3 004 767**

**NACHRICHTENTECHNISCHE ZEITSCHRIFT,
Band 38, Nr. 3, März 1985, Seiten 146-152,
Offenbach, DE; W. HARTMANN et al.:
"8,448-Mbit/s-Leitungsausrüstung als Zubringersystem für den Richtfunk"**

**TELECOM REPORT, Band 2, Beiheft
"Digital-Übertragungstechnik", 1979, Seiten
100-104, München, DE; R. POSPISCHIL:**

**"Digitalsystem zur Übertragung von
34-Mbit/s-Signalen auf Koaxialpaaren"**

(73) Patentinhaber: **Siemens Aktiengesellschaft
Wittelsbacherplatz 2
W-8000 München 2(DE)**

(72) Erfinder: **Drügh, Paul, Dipl.-Ing.
Stockmannstrasse 28
W-8000 München 71(DE)**
Erfinder: **Ey, Klaus, Ing. grad.
Strassbergerstrasse 12
W-8000 München 40(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Anordnung entsprechend dem Oberbegriff des Anspruchs 1.

Nach der Einrichtung digitaler Verbindungen im Weitverkehr zwischen einzelnen Ämtern erfolgt in zunehmenden Maße die Einrichtung von digitalen Verbindungen in der Ortsebene zwischen einem Amt und Teilnehmern. Dabei ergeben sich Schwierigkeiten hinsichtlich der Überwachung der Verbindung und des Teilnehmeranschlusses, da im Gegensatz zum Weitverkehr beim Teilnehmer häufig das Endgerät abgekoppelt ist oder das Endgerät keine Rückmeldeeinrichtung aufweist. Eine Möglichkeit zur Überwachung einer derartigen Verbindung besteht darin, daß der Rahmen des digitalen Übertragungssignals im Teilnehmerendgerät ausgewertet wird und die Rückmeldung eines dringenden Alarms zum Amt über einen besonderen Meldekanal erfolgt. Diese Überwachung ermöglicht jedoch keine gestufte Beurteilung der Verbindung beispielsweise entsprechend der CCITT-Empfehlung G. 821, nach der die Verbindung im Hinblick auf die gestörte Übertragungszeit beurteilt wird und zwischen gestörten und schwergestörten Sekunden und gestörten Minuten unterschieden wird. Die Einrichtung einer derartigen Auswertemöglichkeit würde neben entsprechenden nichtabschaltbaren Geräten beim Teilnehmer auch zusätzliche Übertragungskapazität vom Teilnehmer zum Amt beispielsweise in Form zusätzlicher Doppeladern im symmetrischen Kabel benötigen.

Aus der AU-B-494 731 ist eine digitale Übertragungsstrecke mit einem Amt und ferngespeisten digitalen Endgeräten beschrieben, bei der die digitalen Endgeräte eine Anordnung zum Teilnehmeranschluß mit einer Testeinrichtung und einen Telefonapparat enthalten. Zum Testen der Übertragungsstrecke mit dem teilnehmerseitigen Endgerät wird während Zeiten geringen Verkehrs, vom Amt aus gesteuert, zwischen zwei Teilnehmeranschlüssen eine Verbindung geschaltet, wobei die zugehörigen Telefone abgeschaltet sind und anstelle der Telefonsignale spezielle Testsignale übertragen werden. Die Testsignale werden in der Anordnung zum Teilnehmeranschluß in einem zusätzlich eingeschalteten Codewandler invertiert und in dieser Form zum Amt übertragen. Im Amt werden die bei der Übertragung entstandenen Bitfehler ermittelt und daraus auf die Güte der Übertragungsstrecke geschlossen.

Aus der DE-B-30 04 767 ist ein Verfahren zur kombinierten Überwachung und Fehlerortung in Weitverkehrs-Übertragungsstrecken für digitale Signale beschrieben, bei dem in den Endstellen und den Zwischenregeneratoren eine Überwachung der übertragenen digitalen Signale auf Coderegelverletzungen erfolgt. Dazu wird in wenigstens einem Zwischenregenerator der Übertragungsstrecke die Anzahl der festgestellten Fehler addiert und nach einer Speicherung über einen gesonderten Meldekanal an einer abfragenden Endstelle übermittelt. Zusätzlich kann zur Überprüfung des fernen Leitungsendgerätes, das an sich in der fernen Endstelle selbst überwacht wird, vom nahen Leitungsendgerät aus im fernen Leitungsendgerät durch Übertragen einer der Coderegel wiedersprechenden Anzahl von Nullschritten ein Schleifenschluß geschaltet und das Ortungssignal mit der der Coderegel wiedersprechenden Anzahl von Nullschritten in der Gegenrichtung ausgesendet werden.

Die Überwachung von digitalen Übertragungsstrecken durch Feststellung der bei der Übertragung der digitalen Signale entstandenen Coderegelverletzungen ist auch aus der EP-A-0 031 943 bekannt.

Die Aufgabe bei der vorliegenden Erfindung besteht darin, bei einer Anordnung zum Teilnehmeranschluß der eingangs erwähnten Art eine Überwachungsmöglichkeit zu schaffen, die eine detailliertere Einschätzung der Verbindungsqualität ermöglicht und vom eigentlichen Teilnehmerendgerät unabhängig ist.

Die Aufgabe wird bei einer Anordnung der eingangs erwähnten Art durch die im Kennzeichen des Patentanspruchs 1 angegebenen Maßnahmen gelöst.

Die erfindungsgemäße Anordnung bietet in vorteilhafter Weise die Möglichkeit, den Teilnehmeranschluß und damit die Verbindung zwischen Amt und Teilnehmer vom Amt aus mit geringem Aufwand im Betrieb zu überwachen und gegebenenfalls auch einen Ausfall vom Amt aus zu orten.

Vorteilhafte Weiterbildungen der erfindungsgemäßen Anordnung sind in den Patentansprüchen 2 bis 10 näher beschrieben.

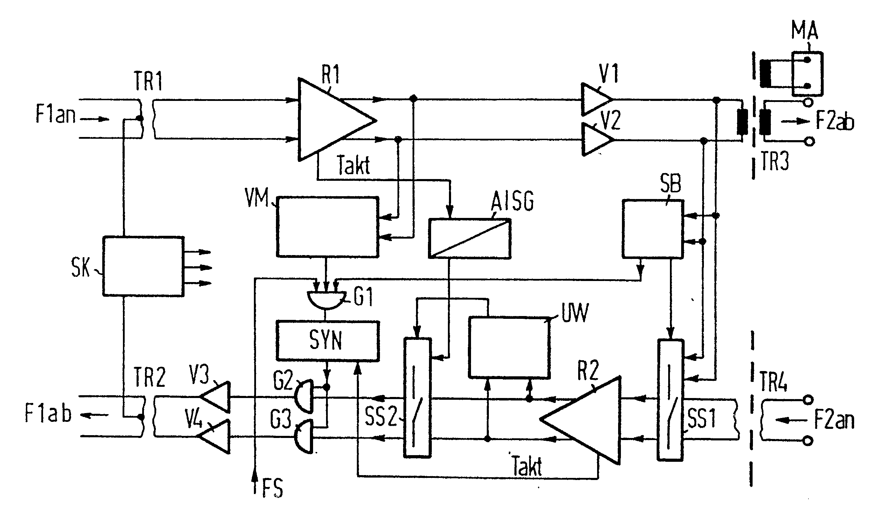

Die Erfindung soll im folgenden an einem in der Zeichnung dargestellten Ausführungsbeispiel näher erläutert werden.

Die Zeichnung zeigt ein erfindungsgemäßes Teilnehmeranschlußgerät für pseudoternäre Signale mit einer Übertragungsgeschwindigkeit von etwa 2 Mbit/s. Die Verbindung zum Amt geschieht über eine Vierdrahtverbindung, wobei in üblicher Weise die vom Amt ankommende Leitung mit Flan und die zum Amt abgehende Leitung mit Flab bezeichnet ist, über diese Leitungen, die über Übertrager TR1, TR2 angekoppelt sind, wird zusätzlich zu den digitalen Signalen der Speisestrom für das Teilnehmeranschlußgerät übertragen. Die ankommende Leitung Flan ist über einen ersten Übertrager TR1 mit dem Eingang eines ersten Regenerators R1 verbunden, außerdem ist an eine Mittelanzapfung der Primärwicklungen des ersten und zweiten Übertragers ein Speisekreise SK angeschlossen, über den der Betriebsstrom für die einzelnen Bauteile des Teilnehmeranschlußgeräts zugeführt wird. Bei dem ersten Regenerator R1 handelt es sich um einen Regenerator für pseudoternäre digitale Signale mit einem Entzerrer, einem Amplitudenentscheider für die positiven und negativen Eingangsimpulse, einer Taktableitung und einem nachgeschalteten Zeitentscheider in Form zweier D-Flip-Flops, denen jeweils getrennt die amplitudenmäßig regenerierten Eingangimpulse zugeführt werden. An den Ausgängen der D-Flip-Flops steht dann eine erste Impulsreihe, die den positiven "1"-Impulsen und eine weitere Impulsreihe, die den negativen "1"-Impulsen am Eingang entspricht, an. Mit jedem der Ausgänge sind ein Eingang eines Coderegel-Verletzungsprüfers VM sowie der Eingang eines ersten bzw. zweiten Verstärkers V1, V2 verbunden. Mit den Ausgängen dieser Verstärker sind die Anschlüsse der Primärwicklung des dritten Übertragers TR3 verbunden, an dessen Sekundärwicklung die zum Teilnehmer abgehende Leitung F2ab des angeschlossen ist. Zusätzlich ist eine weitere Sekundärwicklung vorgesehen, deren Anschlüsse MA einen Meßausgang darstellen.

Mit den Ausgangsanschlüssen des ersten und zweiten Verstärkers V1, V2 sind die Eingänge eines Schleifenbefehlsgebers SB sowie erste Signaleingänge eines Schleifenschalters SS1 verbunden. Die zweiten Signaleingänge des Schleifenschalters SS1 sind mit den Sekundärwicklungsanschlüssen des vierten Übertragers TR4 verbunden, dessen Primärwicklung an die vom Teilnehmer ankommende Leitung F2an angeschlossen ist. Der Schleifenbefehlsgeber SB enthält eine Vergleichseinrichtung, die die übertragenen digitalen Signale auf das Auftreten einer bestimmten als Adresse dienenden Impulskombination hin untersucht und bei deren Auftreten für eine bestimmte Zeit einen Steuerimpuls an den Steuersignaleingang des ersten Schleifenschalters SS1 abgibt, so daß dieser in die Schleifenstellung übergeht und an Stelle der vom vierten Übertrager TR4 und damit vom Teilnehmer stammenden digitalen Signale die von den ersten beiden Verstärkern V1, V2 und damit vom Amt abgegebenen Signale über den Schleifenschalterausgang an den Eingang eines zweiten Regenerators R2 abgibt. Dieser zweite Regenerator R2 ist bis auf den Entzerrer mit den ersten Regenerator R1 baugleich, im Hinblick auf die vergleichsweise kurze Leitung zwischen Teilnehmer und Teilnehmeranschlußgerät wurde auf einen aufwendigen Entzerrer verzichtet.

An die Signalausgänge des zweiten Regenerators R2 sind Signaleingänge einer Signalüberwachung UW sowie eines AIS-Umschalter SS2 angeschlossen. Ein weiterer Eingang des AIS-Umschalters ist an einen AIS-Generator angeschlossen, der mit einem Taktausgang des ersten Regenerators R1 verbunden ist und ein AIS-Signal in Form von getakteten "1"-Impulsen an den AIS-Umschalter abgibt. Bei Ausfall des Ausgangssignals des zweiten Regenerators R2 wird von der Signalüberwachung UW ein Steuersignal an den AIS-Umschalter SS2 abgegeben, so daß dieser statt des Ausgangssignals des zweiten Regenerators R2 ein AIS-Signal über seine Ausgänge an die Eingänge einer nachgeschalteten Koppelanordnung abgibt. Die Koppelanordnung besteht dabei aus zwei UND-Gattern G2,G3 deren erste Eingänge miteinander und mit dem Ausgang einer Synchronisieranordnung SYN verbunden sind, während die zweiten Eingänge jeweils getrennt mit den Signalausgängen des AIS-Umschalters verbunden sind. Die Ausgänge der beiden Gatter sind über einen dritten bzw. vierten Verstärker V3, V4 mit dem Anschluß der Primärwicklung des zweiten Übertragers TR2, an dessen Sekundäranschluß die zum Amt abgehende Leitung Flab angeschlossen ist.

Die Ausgänge des Schleifenbefehlsgebers SB und des Coderegelprüfers VM sind getrennt mit Eingängen eines ersten Gatters G1 und ein weiterer Eingang dieses Gatters ist an einen Anschluß FS angeschlossen, über den ein manuelles oder ein von einer zusätzlichen Fernsteuereinrichtung stammendes Signal an das erste UND-Gatter G1 angelegt werden kann. Der Ausgang des ersten UND-Gatters ist mit dem Eingang der Synchronisieranordnung SYN verbunden, die außerdem vom Takte des zweiten Regenerators R2 getaktet wird und einen Zwischenspeicher enthält. Der Zwischenspeicher dient zur Speicherung der vom Ausgang des ersten UND-Gatters G1 stammenden Fehlerimpulse, die im Regeneratortakt des zweiten Regenerators R2 mit Synchron in die durch die Gatter G2, G3 durchlaufenden digitalen Signale eingeblendet werden, so daß bei jedem Fehlerimpuls wenigstens ein Bit der digitalen Signale ausgeblendet wird.

Über den Coderegelprüfer VM, das erste UND-Gatter G1 und die Synchronisieranordnung SYN wird also eine "Fehlerschleife" gebildet, über die bei jedem Bitfehler in den vom Amt ankommenden digitalen Signal ein Fehlerimpuls erzeugt und durch diesen ein Bit der zum Amt abgehenden digitalen Signale ausgeblendet wird. Dadurch kann im Amt die Summenfehlerquote beider Übertragungsrichtungen überwacht werden. Somit ist dann im Amt eine Auswertung entsprechend der CCITT-Empfehlung G. 821 im Betrieb möglich. Die Qualitätsverschlechterung auf der Übertragungsrichtung vom Teilnehmer zum Amt, die durch das zusätzliche Einblenden von Bitfehlern entsteht, kann in Kauf genommen werden, da sich die Fehlerquote gegenüber der ursprünglich schlechteren Übertragungsrichtung höchstens um den Faktor 2 erhöht, bei derartigen Übertragungseinrichtungen aber praktisch nur Fehlerquotenerhöhungen in Zehnerpotenzen die Übertragungsqualtität merklich verschlechtern.

Zur Überwachung des Teilnehmeranschlusses wurde zusätzlich die Übertragung eines AIS-Signals bei Ausfall des vom Teilnehmer stammenden Signals vorgesehen, anstelle des AIS-Generators, der einen getakten "1"-Pegel abgibt, kann auch ein Oszillator vorgesehen werden.

Für eine vom Amt aus wirksame Fehlerortung ist beim beschriebenen Teilnehmeranschlußgerät die Möglichkeit vorgesehen, über einen Schleifenbefehlsgeber SB und einen Schleifenschalter SS1 eine Schleife zu schließen, über die Prüfsignale übertragen zu können, die für eine genaue Fehlerfeststellung im Amt durch bitweisen Vergleich genau überprüft werden können. Während einer derartigen Schleifenschaltung wird vom Schleifenbefehlsgeber SB ein Logikpegel abgegeben, durch den das erste UND-Gatter G1 und damit die Codefehlerschleife vom Coderegelverletzungsprüfer zu den beiden UND-Gattern G2, G3 gesperrt wird. Dies ist im vorliegenden Falle erforderlich, da das Fehlerortungssignal aus Schleifenschlußbefehl und Prüfsignal nicht im HDB3-Code vorliegt, in dem die digitalen Signale vom Amt zum Teilnehmer und zurück übertragen werden, sondern im AMI-Code. Damit kann aber das Fehlerortungssignal HDB3-Codefehler enthalten, die dann über die Fehlerschleife zu Bitfehlern auf der Übertragungsrichtung vom Teilnehmer zum Amt führen würden und den bitweisen Vergleich des Prüfsignals im Amt stören könnte.

Eine weitere Möglichkeit zur Ausbildung des erfindungsgemäßen Teilnehmerendgerätes besteht darin, daß anstelle eines Coderegelverletzungsprüfers VM eine an sich bekannte Einrichtung zur Auswertung des Rahmenkennungswortes vorgesehen ist und über die Synchronisieranordnung SYN gesteuert die festgestellten Codefehler auch nur in die Übertragung des Rahmenkennwortes vom Teilnehmer zum Amt eingeblendet werden. Beim Ausführungsbeispiel wurde auf diese Möglichkeit verzichtet, da die Rahmenkennwortüberwachung vergleichsweise aufwendiger ist.

## Patentansprüche

1. Anordnung zum Teilnehmeranschluß bei einer digitalen Verbindung zwischen einem Amt und einem Teilnehmerendgerät,
   **dadurch gekennzeichnet,**
   daß an die vom Amt ankommende Leitung (F1an) ein Coderegelprüfer (VM) fest angeschlossen ist, dessen Ausgang für Fehlerimpulse über eine Koppelanordnung (G2, G3) mit der zum Amt abgehenden Leitung (F1ab) verbunden ist und
   daß der teilnehmerseitige Ausgang (F2ab) der Anordnung zum Teilnehmeranschluß über einen vom Amt gesteuerten Schleifenschalter (SS1) mit dem teilnehmerseitigen Eingang (F2an) verbindbar ist.

2. Anordnung nach Anspruch 1, **dadurch gekennzeichnet,** daß die ankommenden und die abgehenden Leitungen (F1an, F1ab, F2an, F2ab) über Übertrager (TR1, 2, 3, 4) angeschlossen sind.

3. Anordnung nach Ansprüchen 1 und 2, **dadurch gekennzeichnet,** daß an die ankommende Leitung (F1an) ein erster Impulsregenerator (R1) angeschlossen ist, an dessen Ausgänge die Eingänge des Coderegelprüfers sowie der teilnehmerseitige Ausgang (F2ab) angeschlossen sind.

4. Anordnung nach Ansprüchen 2 oder 3, **dadurch gekennzeichnet,** daß der Ausgang für Fehlerimpulse des Coderegelprüfers (VM) über ein erstes Logikglied (G1) und eine Synchronisieranordnung (SYN) mit der Koppelanordnung (G2,G3) verbunden ist.

5. Anordnung nach Anspruch 4, **dadurch gekennzeichnet,** daß das erste Logikglied (G1) sowohl über einen am Ort befindlichen Schalter (FS) als auch durch einen über die Verbindung vom Amt übertragenen Schaltbefehl einschaltbar ist.

6. Anordnung nach Patentanspruch 1, **dadurch gekennzeichnet,** daß ein Schleifenbefehlsgeber (SB) vorgesehen ist, dessen Eingänge gegebenenfalls über Verstärker (V1,V2) an Ausgänge des ersten Impulsregenerator angeschlossen sind und daß an die Ausgänge des Schleifenbefehlsgebers (SB) ein Eingang des ersten Logikgliedes (G1) und ein Steuereingang des Schleifenschalters (SS1) angeschlossen sind.

7. Anordnung nach Patentanspruch 1, **dadurch gekennzeichnet,** daß mit dem teilnehmerseitigen Eingang (F2an) oder mit dem Ausgang des Schleifenschalters (SS1) ein zweiter Impulsregenerator (R2) verbunden ist, dessen Ausgänge mit einer Signalüberwachung (UW) und mit ersten Signaleingängen eines AIS-Umschalter (SS2) verbunden sind, daß ein Steuereingang des AIS-Umschalters (SS2) mit einem Ausgang der Signalüberwachung und weitere Signaleingänge des AIS-Umschalters mit dem Ausgang eines AIS-Generators (AISG) verbunden sind und daß an die Ausgänge des AIS-Umschalters (SS2) jeweils getrennt ein Eingang der Koppelanordnung (G2,G3) angeschlossen ist.

8. Anordnung nach Ansprüchen 1, 4 oder 7, **dadurch gekennzeichnet**, daß die Koppelanordnung ein zweites und ein drittes Logikglied
(G2,G3) enthält, deren erste Eingänge miteinander und mit einem Ausgang der Synchronisieranordnung (SYN) und deren zweite Eingänge jeweils getrennt mit Ausgängen des AIS-
Umschalters (SS2) verbunden sind und daß die
Ausgänge des zweiten und dritten Logikgliedes
(G2,G3) jeweils getrennt, gegebenenfalls über
Verstärker (V3,V4) mit der abgehenden Leitung

9. Anordnung nach Ansprüchen 4 oder 8, **dadurch gekennzeichnet**, daß die Synchronsieranordnung (SYN) einen vom zweiten Impulsregenerator (R2) getakteten Zwischenspeicher
enthält, aus dem die zwischengespeicherten
Fehlerimpulse an die Koppelanordnung
(G2,G3) abgegeben werden.

**Claims**

1. Arrangement for the subscriber connection in a
digital link between an exchange and a subscriber terminal, characterised in that a code
violation monitor (VM) is permanently connected to the line (F1an) incoming from the exchange, the output for error pulses of which
checker is connected via a switching arrangement (G2, G3) to the line (F1ab) outgoing to
the exchange and that the output (F2ab) at the
subscriber end of the arrangement can be connected to the input (F2an) at the subscriber
end for subscriber connection via an
exchange-controlled loop switch (SS1).

2. Arrangement according to Claim 1, characterised in that the incoming and the outgoing
lines (F1an, F1ab, F2an, F2ab) are connected
via transformers (TR1, 2, 3, 4).

3. Arrangement according to Claims 1 and 2,
characterised in that a first pulse regenerator
(R1) is connected to the incoming line (F1an),
the outputs of which are connected to the
inputs of the code violation monitor and the
output (F2ab) at the subscriber end.

4. Arrangement according to Claims 2 or 3,
characterised in that the output for error pulses
of the code violation monitor (VM) is connected via a first logic element (G1) and a
synchronising arrangement (SYN) to the
switching arrangement (G2, G3).

5. Arrangement according to Claim 4, characterised in that the first logic element (G1) can
be switched on both via a local switch (FS) and
via a switching command transmitted via the
connection from the exchange.

6. Arrangement according to Patent Claim 1,
characterised in that a loop command transmitter (SB) is provided, the inputs of which, if
necessary, are connected via amplifiers (V1,
V2) to outputs of the first pulse regenerator
and that the outputs of the loop command
transmitter (SB) are connected to an input of
the first logic element (G1) and to a control
input of the loop switch (SS1).

7. Arrangement according to Patent Claim 1,
characterised in that the input (F2an) at the
subscriber end or the output of the loop switch
(SS1) is connected to a second pulse regenerator (R2), the outputs of which are connected
to a signal monitoring circuit (UW) and to first
signal inputs of an AIS change-over switch
(SS2), that a control input of the AIS change-
over switch (SS2) is connected to an output of
the signal monitoring circuit and further signal
inputs of the AIS change-over switch are connected to the output of an AIS generator
(AISG) and that the outputs of the AIS change-
over switch (SS2) are in each case separately
connected to an input of the switching arrangement (G2, G3).

8. Arrangement according to Claims 1, 4 or 7
characterised in that the switching arrangement
contains a second and a third logic element
(G2, G3) the first inputs of which are connected to one another and to an output of the
synchronising arrangement (SYN) and the second inputs of which are in each case separately connected to outputs of the AIS change-
over switch (SS2) and that the outputs of the
second and third logic element (G2, G3) are in
each case separately connected, if necessary
via amplifiers (V3, V4), to the outgoing line
(F1ab).

9. Arrangement according to Claims 4 or 8,
characterised in that the synchronising arrangement (SYN) contains a buffer store which
is clocked by the second pulse regenerator
(R2) and from which the buffer-stored error
pulses are output to the switching arrangement
(G2, G3).

**Revendications**

1. Dispositif de raccordement d'abonné dans le cas d'une liaison numérique entre un central et un poste terminal d'abonné, caractérisé par le fait

qu'à la ligne (F1an), qui arrive du central, est raccordé de façon fixe un dispositif (VM) de contrôle de la règle de code, dont la sortie pour des impulsions d'erreur est raccordée, au moyen d'un dispositif de couplage (G2,G3), à la ligne (F1ab) qui part en direction du central, et

que la sortie (F2ab), située côté abonné, du dispositif de raccordement d'abonné peut être raccordée à l'entrée (F2an), située côté de l'abonné, au moyen d'un interrupteur de boucle (SS1) commandé par le central.

2. Dispositif suivant la revendication 1, caractérisé par le fait que les lignes d'arrivée et de départ (F1an,F1ab,F2an,F2ab) sont raccordées par l'intermédiaire de transformateurs (TR1,2,3,4).

3. Dispositif suivant les revendications 1 et 2, caractérisé par le fait qu'à la ligne d'arrivée (F1an) est raccordé un premier régénérateur d'impulsions (R1), aux sorties duquel sont raccordées les entrées du dispositif de contrôle de la règle de code ainsi que la sortie (F2ab) située côté abonné.

4. Dispositif suivant les revendications 2 ou 3, caractérisé par le fait que la sortie pour les impulsions d'erreur du dispositif (VM) de contrôle de la règle de code est raccordée par l'intermédiaire d'un premier circuit logique (G1) et d'un dispositif de synchronisation (SYN) au dispositif de couplage (G2,G3).

5. Dispositif suivant la revendication 4, caractérisé par le fait que le premier circuit logique (G1) peut être fermé aussi bien par l'intermédiaire d'un interrupteur (FS) installé sur place que par une instruction de commutation transmise par l'intermédiaire de la liaison partant du central.

6. Dispositif suivant la revendication 1, caractérisé par le fait qu'il est prévu un générateur (SB) d'instructions de boucle, dont les entrées sont éventuellement raccordées par des amplificateurs (V1,V2) à des sorties du premier régénérateur d'impulsions, qu'une entrée du premier circuit logique (G1) et une entrée de commande de l'interrupteur de boucle (SS1) sont raccordées aux sorties du générateur (SB) d'instructions de boucle.

7. Dispositif suivant la revendication 1, caractérisé par le fait qu'à l'entrée (F2an), située côté abonné, ou à la sortie de l'interrupteur de boucle (SS1) est raccordé un second régénérateur d'impulsions (R2), dont les sorties sont raccordées à un dispositif (UE) de contrôle des signaux à des premières entrées de signaux d'un commutateur AIS (SS2), qu'une entrée de commande du commutateur AIS (SS2) est raccordée à une sortie du dispositif de contrôle de signaux et que d'autres entrées de signaux du commutateur AIS sont raccordées à la sortie d'un générateur AIS (AISG) et qu'une entrée du dispositif de couplage (G2,G3) est raccordée, respectivement de façon séparée, aux sorties du commutateur AIS (SS2).

8. Montage suivant les revendications 1, 4 ou 7, caractérisé par le fait que le dispositif de couplage contient des second et troisième circuits logiques (G2,G3), dont les premières entrées sont raccordées entre elles et à une sortie du dispositif de synchronisation (SYN) et dont les secondes entrées sont raccordées respectivement séparément à des sorties du commutateur AIS (SS2), et que les sorties des second et troisième circuits logiques (G2,G3) sont raccordées respectivement séparément, éventuellement par l'intermédiaire d'amplificateurs (V3,V4), à la ligne de départ (F1ab).

9. Dispositif selon la revendication 4 ou 8, caractérisé en ce que le dispositif de synchronisation (SYN) contient une mémoire intermédiaire, qui est commandée de façon cadencée par le second régénérateur d'impulsions (R2) et à partir de laquelle les impulsions d'erreurs, mémorisées temporairement, sont envoyées au dispositif de couplage (G2,G3).